# EUROPEAN PATENT SPECIFICATION

(11) **EP 2 900 920 B1**
(45) Date of publication and mention of the grant of the patent: **30.06.2021**
(21) Application number: 13853442.5
(22) Date of filing: 14.08.2013
(51) Int. Cl.: F01D 5/14, F04D 29/68

(54) **ENDWALL CONTOURING**
STIRNWANDKONTURIERUNG
RÉALISATION DE CONTOUR DE PAROI D'EXTRÉMITÉ

(30) Priority: 28.09.2012 US 201261706983 P; 30.10.2012 US 201213664031
(43) Date of publication of application: 05.08.2015
(73) Proprietor: Raytheon Technologies Corporation, Farmington, CT 06032 (US)
(72) Inventor: PRAISNER, Thomas, J., Colchester, CT 06415 (US); AGGARWALA, Andrew, S., Vernon, CT 06066 (US); NASH, Timothy, Charles, East Hartford, CT 06118 (US); ALLEN-BRADLEY, Eunice, Vernon, CT 06066 (US); GROVER, Eric, A., Tolland, CT 06084 (US)
(74) Representative: Dehns
(86) International application number: PCT/US2013/054944
(87) International publication number: WO 2014/074190

(56) References cited:
- EP-A1- 2 487 329
- EP-A2- 2 204 535
- EP-A2- 2 423 444
- WO-A2-2011/039352
- DE-A1-102008 021 053
- US-A1- 2007 258 818
- US-A1- 2007 258 819
- US-A1- 2008 232 968
- US-A1- 2010 080 708
- US-A1- 2010 143 139
- US-A1- 2010 158 696
- US-A1- 2010 158 696
- US-A1- 2011 044 818
- US-A1- 2011 044 818

## Description

### Field of the Disclosure

The present disclosure relates generally to airfoil arrays utilized in gas turbine engines and, more particularly, to endwall contouring.

### Background of the Disclosure

Gas turbine engines typically include a compressor section, a combustor section, and a turbine section, with an annular flow path extending axially through each. Initially, air flows through the compressor where it is compressed or pressurized. The combustor then mixes and ignites the compressed air with fuel, generating hot combustion gases. These hot combustion gases are then directed by the combustor to the turbine where power is extracted from the hot gases by causing blades of the turbine to rotate.

Some sections of the engine include airfoil arrays. Air within the engine moves through fluid flow passages in the arrays. The fluid flow passages are established by adjacent airfoils projecting from laterally extending endwalls. Near the endwalls, the fluid flow is dominated by a flow phenomenon known as a horseshoe vortex, which forms as a result of the endwall boundary layer separating from the endwall as the gas approaches the leading edges of the airfoils. The separated gas reorganizes into the horseshoe vortex. There is a high loss of efficiency associated with the vortex, and this loss is referred to as "secondary" or endwall loss. Accordingly, there exists a need for a way to mitigate or reduce endwall losses.

EP 2487329 shows the technical features of the preamble of claim 1. US 2011/044818, EP 2204535, US 2010/158696, US 2010/080708, US 2010/143139 and EP 2423444 are also useful in understanding the background of the present disclosure.

### Summary of the Disclosure

According to one embodiment of the present disclosure, an airfoil array as defined in claim 1 is disclosed.

In a refinement, a local maximum in radial extent of the convex profiled region may be positioned between the leading edge and mid-chord of the airfoil.

In another refinement, each airfoil may have an axial chord, and a local maximum in radial extent of the convex profiled region may be disposed between about 0% to about 50% of the axial chord.

In another refinement, each flow passage may have a passage width, and a local maximum in radial extent of the convex profiled region may be disposed between about 0% to about 50% of the passage width.

In another refinement, a local minimum in radial extent of the concave profiled region may be positioned between the leading edge and the trailing edge of the airfoil.

In a related refinement, the concave profiled region may be adjacent to the first side of the airfoil near mid-chord.

In another related refinement, the concave profiled region may be adjacent to the second side of the adjacent airfoil along a significant length of the second side.

In another related refinement, the concave profiled region adjacent to the second side of the adjacent airfoil may extend along a majority of the second side of the airfoil.

In another refinement, each airfoil may have an axial chord and each flow passage may have a passage width. A local minimum in radial extent of the concave profiled region may be disposed between about 0% to about 100% of the axial chord and between about 0% to about 100% of the passage width.

In yet another refinement, the first side may be a pressure side of an airfoil, and the opposite second side may be a suction side of an airfoil.

According to another embodiment, a gas turbine engine according to claim 8 is disclosed.

In a refinement, the convex profiled surface may be adjacent to the first side of each airfoil.

In another refinement, each airfoil may have an axial chord, and the concave profiled surface adjacent to the first side of each airfoil may extend between about 30% to about 80% of the axial chord.

In another refinement, each airfoil may have an axial chord, and the concave profiled surface adjacent to the second side of the adjacent airfoil may extend between about 0% to about 100% of the axial chord.

In another refinement, each airfoil may have an axial chord, and a local minimum in radial extent of the concave profiled surface adjacent to the second side of each airfoil may be positioned between about 0% to about 100% of the axial chord.

In another refinement, each flow passage may have a passage width, and a local minimum in radial extent of the concave profiled surface may be disposed between about 30% to about 80% of the passage width.

In another refinement, a local maximum in radial extent of the convex profiled surface may be disposed between about 0% to about 50% of the passage width, and a local minimum in radial extent of the concave profiled surface may be disposed between about 50% to about 100% of the passage width.

In yet another refinement, the first side may be a pressure side of an airfoil and the opposite second side may be a suction side of an airfoil.

These and other aspects and features of the disclosure will become more readily apparent upon reading the following detailed description when taken in conjunction with the accompanying drawings.

### Brief Description of the Drawings

FIG. 1 is a partial sectional view of a gas turbine engine according to one embodiment of the present disclosure;
FIG. 2 is a perspective view of an airfoil array within the gas turbine engine of FIG. 1; and
FIG. 3 is a plan view with topographic contours showing a portion of the airfoil array of FIG. 2.

While the present disclosure is susceptible to various modifications and alternative constructions, certain illustrative embodiments thereof, will be shown and described below in detail. It should be understood, however, that there is no intention to be limited to the specific embodiments disclosed, but on the contrary, the intention is to cover all modifications, alternative constructions, and equivalents along within the spirit and scope of the present disclosure.

### Detailed Description

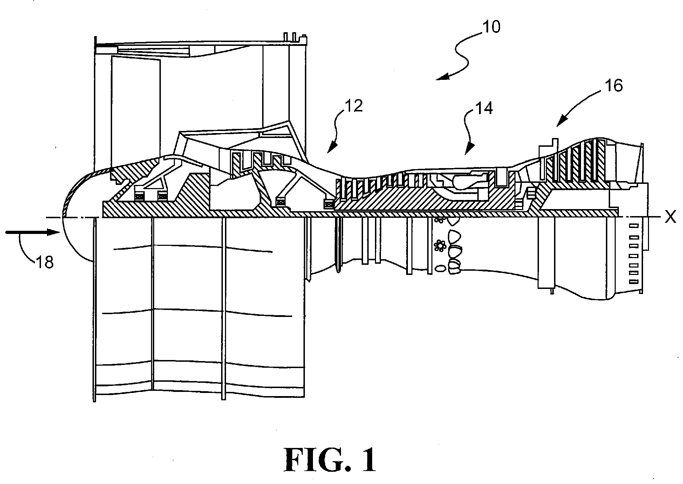

Referring now to the drawings, and with specific reference to FIG. 1, in accordance with the teachings of the disclosure, an exemplary gas turbine engine 10 is shown. The gas turbine engine 10 may generally comprise a compressor section 12 where air is pressurized, a combustor section 14 downstream of the compressor section 12 which mixes and ignites the compressed air with fuel, thereby generating hot combustion gases, a turbine section 16 downstream of the combustor section 14 for extracting power from the hot combustion gases, and an annular flow path 18 extending axially through each.

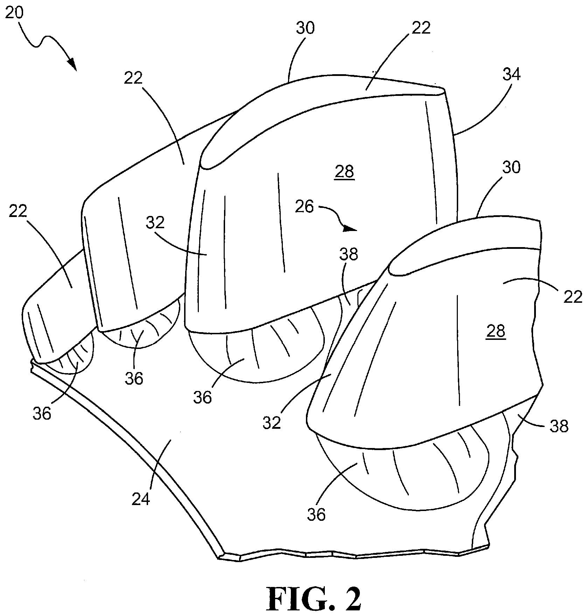

The turbine section 16 or the compressor section 12 may include at least one airfoil array 20. As shown best in FIG. 2, the airfoil array 20 comprises a plurality of airfoils 22 projecting radially from an endwall 24. For example, the airfoils 22 may be provided as a stage of rotor blades or stator vanes in the compressor section 12 or the turbine section 16 of the gas turbine engine 10. The endwall 24 may be either an inner diameter (ID) endwall or an outer diameter (OD) endwall or both. The airfoils 22 are circumferentially spaced apart on the endwall 24 and arranged about the engine centerline X (FIG. 1), thereby defining a plurality of fluid flow passages 26 between adjacent airfoils 22 with the endwall 24. Each airfoil 22 has a first side 28 and an opposite second side 30 extending axially in chord between a leading edge 32 and a trailing edge 34. Fluid flow, such as airflow, moves toward the flow passage 26 from a position forward of the leading edge 32 of the airfoils 22 as the engine 10 operates.

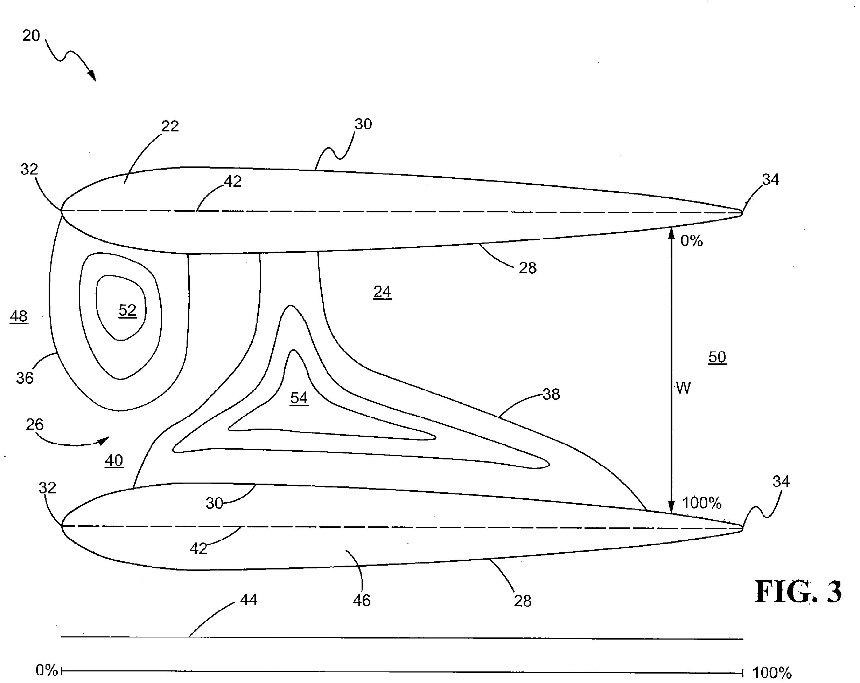

The endwall 24 has a plurality of convex profiled regions 36 and a plurality of concave profiled regions 38 configured to direct flow through each of the flow passages 26 within the airfoil array 20. Illustrated in FIG. 3 with topographic contour lines, near the leading edge 32 of at least one of said plurality of airfoils 22 within the airfoil array 20, the convex profiled region 36 is located adjacent to the first side 28 of each airfoil 22. The convex profiled region 36 may extend radially inward toward the annular flow path 18.

Each airfoil 22 has a chord 42, which is defined as a line from the leading edge 32 to the trailing edge 34, and an axial chord 44, which is a projection of the chord 42 onto a plane containing the engine centerline X. Relevant distances may be expressed as a percentage of the length of the axial chord 44, as shown in the percentage scale at the bottom of FIG. 3. Each fluid flow passage 26 may have a passage width W measured from the first side 28 of each airfoil 22 to the second side 30 of a neighboring airfoil 46. The passage width W may typically vary from a passage inlet 48 to a passage outlet 50 so that the passage width may be locally different at different chordwise locations. Relevant distances may be expressed as a fraction or percentage of the length of the passage width W, with 0% referenced at the first side 28 of each airfoil 22 and 100% referenced at the second side 30 of the neighboring airfoil 46.

From the surface 40 adjacent the convex profiled region 36, the convex region 36 gradually increases in radial height, or moves radially inward toward the annular flow path 18, to a local maximum in radial extent 52. It will be understood that the convex profiled region 36 may extend further than the illustrated contour lines. The convex profiled region 34 may have the local maximum in radial extent 52 positioned between the leading edge 32 and mid-chord of the airfoil 22. The local maximum in radial extent 52 of the convex profiled region 34 may be disposed within an inclusive axial range of about 0% to about 50% of the axial chord and may be disposed within an inclusive lateral range of about 0% to about 50% of the passage width W.

The concave profiled region 38 is elongated across at least one of said plurality of fluid flow passages 26. Relative to a surface 40 adjacent the concave profiled region 38, the concave region 38 may extend radially outward away from the annular flow path 18. From the surface 40 adjacent the concave profiled region 38, the concave region 38 gradually decreases in radial height, or moves outward radially away from the annular flow path 18, to a local minimum in radial extent 54. The concave region 38 of the endwall 24 extends across the fluid flow passage 26 from the first side 28 of each airfoil 22 to the second side 30 of the neighboring airfoil 46. It will be understood that the concave profiled region 38 may extend further than the illustrated contour lines.

The concave profiled region 38 may be adjacent to the first side 28 of the airfoil 22 near mid-chord and may be predominantly adjacent to the second side 30 of the neighboring airfoil 46 along a significant length of the second side 30, about a majority of the second side 30 of the airfoil 46. The extent of the concave region 38 adjacent the first side 28 of the airfoil 22 is less than the extent of the concave region 38 adjacent the second side 30 of the neighboring airfoil 46. Adjacent the first side 28 of the airfoil 22, the concave region 38 extends between an inclusive range of about 30% to about 80% of the axial chord. Adjacent the second side 30 of the neighboring airfoil 46, the concave region 38 extends between an inclusive range of about 0% to about 100% of the axial chord. The local minimum in radial extent 54 of the concave profiled region 38 may be positioned between the leading edge 32 and the trailing edge 34 of the airfoils 22, 36, or within the inclusive range of about 0% to about 100% of the axial chord. The local minimum in radial extent 54 may also be disposed within an inclusive lateral range of about 0% to about 100% of the passage width, for example, between about 30% to about 80% of the passage width, or for example, between about 50% to about 100% of the passage width.

It will be understood that the endwall 24 contouring described herein may be applied to any type of airfoil array 20 without departing from the scope of the invention. According to an exemplary embodiment, the contoured endwall 24 may be applied to an airfoil array 20 with airfoils 22 having a camber or turning airfoil, as shown in FIG. 2. For example, the first side 28 of each airfoil 22 may be a pressure side, the second side 30 of each airfoil 22 may be a suction side, the convex profiled region 36 may be adjacent the pressure side of the airfoil 22, and the concave profiled region 38 may be elongated across each fluid flow passage 26 from the pressure side of each airfoil 22 to the suction side 30 of the neighboring airfoil. According to another exemplary embodiment, the contoured endwall 24 may be applied to an airfoil array 20 with airfoils 22 having no camber, as shown in FIG. 3. Such airfoils 22 may be provided, for example, as compressor or turbine blades or vanes, or middle turbine frames in a gas turbine engine.

### Industrial Applicability

From the foregoing, it can be seen that the teachings of this disclosure can find industrial application in any number of different situations, including but not limited to, gas turbine engines. Such engines may be used, for example, on aircraft for generating thrust, or in land, marine, or aircraft applications for generating power.

The disclosure described provides a way to mitigate or reduce endwall losses in an airfoil array. By positioning a convex profiled region of the endwall adjacent the first side of the airfoils near the leading edge and a concave profiled region of the endwall elongated across the flow passages, the present invention influences flow through the flow passages, thereby reducing endwall losses due to the horseshoe vortex. Furthermore, the contoured endwall described herein results in an improved aerodynamic performance of the airfoil arrays. Such contouring may minimize aerodynamic losses through blade or vane passages of a gas turbine engine, for example, those of a second stage high pressure turbine vane. In so doing, this may decrease heat, friction and pressure losses, while improving engine efficiency and life of the blade or vane.

## Claims

1. An airfoil array (20), comprising:
an endwall (24); and
a plurality of airfoils (22) radially projecting from the endwall (24), each airfoil (22) having a first side (28) and an opposite second side (30) extending axially in chord between a leading edge (32) and a trailing edge (34), the airfoils (22) circumferentially spaced apart on the endwall (24) thereby defining a plurality of flow passages (26) between adjacent airfoils (22); and
a convex profiled region (36) extending from the endwall (24) adjacent the first side (28) of at least one of said plurality of airfoils (22) near the leading edge (32) of the at least one of said plurality of airfoils (22) to the second side (30) of a neighboring airfoil (46), wherein the convex profiled region (36) gradually increases in radial height to a local maximum in radial extent (52),
**characterised by** further comprising:
a concave profiled region (38) in the endwall (24) adjacent the first side (28) between a range of about 30% to 80% of an axial chord of the airfoil having the first side (28) and predominantly adjacent to the second side (30) of the neighboring airfoil (46) between a range of 0% to 100% of an axial chord of the airfoil having the second side (30) and extending across said at least one of said plurality of flow passages (26), the concave profile region (38) gradually decreases in radial height to a local minimum in radial extent (54), wherein the concave profiled region (38) is elongated across the flow passage (26) from the first side (28) of at least one of said plurality of airfoils (22) to the second side (30) of an adjacent airfoil (46), and an extent of the concave profiled region (38) adjacent the first side (28) of the airfoil (22) is less than an extent of the concave profiled region (38) adjacent the second side (30) of the adjacent airfoil (46).

2. The airfoil array (20) of claim 1, wherein the local maximum in radial extent of the convex profiled region (36) is positioned between the leading edge (32) and mid-chord of the airfoil.

3. The airfoil array (20) of claim 1 or 2, wherein the local maximum in radial extent of the convex profiled region (36) is disposed between about 0% to about 50% of the axial chord (44).

4. The airfoil array (20) of claim 2 or 3, wherein each flow passage (26) has a passage width (W), and the local maximum in radial extent of the convex profiled region (36) is disposed between about 0% to about 50% of the passage width (W).

5. The airfoil array (20) of any preceding claim, wherein the local minimum in radial extent of the concave profiled region (38) is positioned between the leading edge (32) and the trailing edge (34) of the airfoil (22).

6. The airfoil array (20) of claim 5, wherein the local minimum in radial extent of the concave profiled region (38) is disposed between about 30% to about 80% of the passage width (W).

7. The airfoil array (20) of any preceding claim, wherein the concave profiled region (38) is adjacent to the first side (28) of the airfoil (22) near mid-chord.

8. A gas turbine engine (10), comprising:
a compressor section (12);
a combustor section (14) downstream of the compressor section (12); and
a turbine section (16) downstream of the combustor section (14), one of the compressor section (12) and the turbine section (16) having at least one airfoil array (20) according to any preceding claim.

9. The gas turbine engine (10) of claim 8, wherein each airfoil (22, 46) has an axial chord, and the local minimum in radial extent of the concave profiled surface (38) adjacent to the second side (30) of the adjacent airfoil (46) is positioned between about 0% to about 100% of the axial chord.

10. The gas turbine engine (10) of claim 8 or 9, wherein the first side (28) is a pressure side of an airfoil (22) and the opposite second side (30) is a suction side of an airfoil (22, 46).

## Patentansprüche

1. Schaufelprofilanordnung (20), umfassend:
eine Stirnwand (24); und
eine Vielzahl von Schaufelprofilen (22), die radial von der Stirnwand (24) vorragen, wobei jedes Schaufelprofil (22) eine erste Seite (28) und eine gegenüberliegende zweite Seite (30) aufweist, die sich axial in der Profiltiefe zwischen einer Vorderkante (32) und einer Hinterkante (34) erstrecken, wobei die Schaufelprofile (22) in Umfangsrichtung an der Stirnwand (24) beabstandet sind, wodurch sie eine Vielzahl von Strömungskanälen (26) zwischen angrenzenden Schaufelprofilen (22) definieren; und
einen konvexen profilierten Bereich (36), der sich von der Stirnwand (24) angrenzend an die erste Seite (28) mindestens eines aus der Vielzahl von Schaufelprofilen (22) nahe der Vorderkante (32) mindestens eines aus der Vielzahl von Schaufelprofilen (22) zu der zweiten Seite (30) eines benachbarten Schaufelprofils (46) erstreckt, wobei der konvexe profilierte Bereich (36) der radialen Höhe nach zu einem lokalen Maximum in der radialen Erstreckung (52) graduell zunimmt,
**dadurch gekennzeichnet, dass** sie ferner Folgendes umfasst:
einen konkaven profilierten Bereich (38) in der Stirnwand (24), der an die erste Seite (28) zwischen einem Bereich von etwa 30 % bis 80 % einer axialen Profiltiefe des Schaufelprofils, das die erste Seite (28) aufweist, angrenzt und überwiegend an die zweite Seite (30) des benachbarten Schaufelprofils (46) zwischen einem Bereich von 0 % bis 100 % einer axialen Profiltiefe des Schaufelprofils, das die zweite Seite (30) aufweist, angrenzt und sich über den mindestens einen aus der Vielzahl von Strömungskanälen (26) erstreckt, wobei der konkave profilierte Bereich (38) der radialen Höhe nach zu einem lokalen Minimum in der radialen Erstreckung (54) graduell abnimmt, wobei der konkave profilierte Bereich (38) über den Strömungskanal (26) von der ersten Seite (28) mindestens eines aus der Vielzahl von Schaufelprofilen (22) zu der zweiten Seite (30) eines angrenzenden Schaufelprofils (46) verlängert ist, und eine Erstreckung des konkaven profilierten Bereichs (38) angrenzend an die erste Seite (28) des Schaufelprofils (22) kleiner ist als eine Erstreckung des konkaven profilierten Bereichs (38) angrenzend an die zweite Seite (30) des angrenzenden Schaufelprofils (46).

2. Schaufelprofilanordnung (20) nach Anspruch 1, wobei das lokale Maximum in der radialen Erstreckung des konvexen profilierten Bereichs (36) zwischen der Vorderkante (32) und der Mitte der Profiltiefe des Schaufelprofils positioniert ist.

3. Schaufelprofilanordnung (20) nach Anspruch 1 oder 2, wobei das lokale Maximum in der radialen Erstreckung des konvexen profilierten Bereichs (36) zwischen etwa 0 % bis etwa 50 % der axialen Profiltiefe (44) angeordnet ist.

4. Schaufelprofilanordnung (20) nach Anspruch 2 oder 3, wobei jeder Strömungskanal (26) eine Kanalbreite (W) aufweist und das lokale Maximum in der radialen Erstreckung des konvexen profilierten Bereichs (36) zwischen etwa 0 % bis etwa 50 % der Kanalbreite (W) angeordnet ist.

5. Schaufelprofilanordnung (20) nach einem der vorstehenden Ansprüche, wobei das lokale Minimum in der radialen Erstreckung des konkaven profilierten Bereichs (38) zwischen der Vorderkante (32) und der Hinterkante (34) des Schaufelprofils (22) angeordnet ist.

6. Schaufelprofilanordnung (20) nach Anspruch 5, wobei das lokale Minimum in der radialen Erstreckung des konkaven profilierten Bereichs (38) zwischen etwa 30 % bis etwa 80 % der Kanalbreite (W) angeordnet ist.

7. Schaufelprofilanordnung (20) nach einem der vorstehenden Ansprüche, wobei der konkave profilierte Bereich (38) an die erste Seite (28) des Schaufelprofils (22) nahe der Mitte der Profiltiefe angrenzt.

8. Gasturbinentriebwerk (10), umfassend:
einen Verdichterabschnitt (12);
einen Brennkammerabschnitt (14) stromabwärts des Verdichterabschnitts (12); und
einen Turbinenabschnitt (16) stromabwärts des Brennkammerabschnitts (14), wobei einer aus dem Verdichterabschnitt (12) und dem Turbinenabschnitt (16) mindestens eine Schaufelprofilanordnung (20) nach einem der vorstehenden Ansprüche aufweist.

9. Gasturbinentriebwerk (10) nach Anspruch 8, wobei jedes Schaufelprofil (22, 46) eine axiale Profiltiefe aufweist und das lokale Minimum in der radialen Erstreckung der konkaven profilierten Fläche (38) angrenzend an die zweite Seite (30) des angrenzenden Schaufelprofils (46) zwischen etwa 0 % bis etwa 100 % der axialen Profiltiefe angeordnet ist.

10. Gasturbinentriebwerk (10) nach Anspruch 8 oder 9, wobei die erste Seite (28) eine Druckseite eines Schaufelprofils (22) ist und die gegenüberliegende zweite Seite (30) eine Saugseite des Schaufelprofils (22, 46) ist.

## Revendications

1. Réseau de profil aérodynamique (20), comprenant :
une paroi d'extrémité (24) ; et
une pluralité de profils aérodynamiques (22) faisant saillie radialement depuis la paroi d'extrémité (24), chaque profil aérodynamique (22) ayant un premier côté (28) et un second côté opposé (30) s'étendant axialement en corde entre un bord d'attaque (32) et un bord de fuite (34), les profils aérodynamiques (22) espacés circonférentiellement sur la paroi d'extrémité (24) définissant ainsi une pluralité de passages d'écoulement (26) entre des profils aérodynamiques (22) adjacents ; et
une région profilée convexe (36) s'étendant depuis la paroi d'extrémité (24) adjacente au premier côté (28) d'au moins un de ladite pluralité de profils aérodynamiques (22) près du bord d'attaque (32) de l'au moins un de ladite pluralité de profils aérodynamiques (22) vers le second côté (30) d'un profil aérodynamique voisin (46), dans lequel la région profilée convexe (36) augmente progressivement en hauteur radiale jusqu'à un maximum local de l'étendue radiale (52),
**caractérisé en ce qu'**il comprend en outre :
une région profilée concave (38) dans la paroi d'extrémité (24) adjacente au premier côté (28) entre une plage d'environ 30 % à 80 % d'une corde axiale du profil aérodynamique ayant le premier côté (28) et principalement adjacente au second côté (30) du profil aérodynamique voisin (46) entre une plage de 0 % à 100 % d'une corde axiale du profil aérodynamique ayant le second côté (30) et s'étendant à travers ledit au moins un de ladite pluralité de passages d'écoulement (26), la région de profil concave (38) diminue progressivement en hauteur radiale jusqu'à un minimum local de l'étendue radiale (54), dans lequel la région profilée concave (38) est allongée à travers le passage d'écoulement (26) depuis le premier côté (28) d'au moins un de ladite pluralité de profils aérodynamiques (22) au second côté (30) d'un profil aérodynamique adjacent (46), et une étendue de la région profilée concave (38) adjacente au premier côté (28) du profil aérodynamique (22) est inférieure à une étendue de la région profilée concave (38) adjacente au second côté (30) du profil aérodynamique adjacent (46).

2. Réseau de profil aérodynamique (20) selon la revendication 1, dans lequel le maximum local de l'étendue radiale de la région profilée convexe (36) est positionné entre le bord d'attaque (32) et la mi-corde du profil aérodynamique.

3. Réseau de profil aérodynamique (20) selon la revendication 1 ou 2, dans lequel le maximum local de l'étendue radiale de la région profilée convexe (36) est disposé entre environ 0 % et environ 50 % de la corde axiale (44) .

4. Réseau de profil aérodynamique (20) selon la revendication 2 ou 3, dans lequel chaque passage d'écoulement (26) a une largeur de passage (W), et le maximum local de l'étendue radiale de la région profilée convexe (36) est disposé entre environ 0 % et environ 50 % de la largeur de passage (W).

5. Réseau de profil aérodynamique (20) selon une quelconque revendication précédente, dans lequel le minimum local de l'étendue radiale de la région profilée concave (38) est positionné entre le bord d'attaque (32) et le bord de fuite (34) du profil aérodynamique (22).

6. Réseau de profil aérodynamique (20) selon la revendication 5, dans lequel le minimum local de l'étendue radiale de la région profilée concave (38) est disposé entre environ 30 % et environ 80 % de la largeur de passage (W).

7. Réseau de profil aérodynamique (20) selon une quelconque revendication précédente, dans lequel la région profilée concave (38) est adjacente au premier côté (28) du profil aérodynamique (22) près de la mi-corde.

8. Moteur à turbine à gaz (10), comprenant :
une section de compresseur (12) ;
une section de chambre de combustion (14) en aval de la section de compresseur (12) ; et
une section de turbine (16) en aval de la section de chambre de combustion (14), l'une de la section de compresseur (12) et de la section de turbine (16) ayant au moins un réseau de profil aérodynamique (20) selon une quelconque revendication précédente.

9. Moteur à turbine à gaz (10) selon la revendication 8, dans lequel chaque profil aérodynamique (22, 46) a une corde axiale, et le minimum local de l'étendue radiale de la surface profilée concave (38) adjacente au second côté (30) du profil aérodynamique adjacent (46) est positionné entre environ 0 % et environ 100 % de la corde axiale.

10. Moteur à turbine à gaz (10) selon la revendication 8 ou 9, dans lequel le premier côté (28) est un intrados d'un profil aérodynamique (22) et le second côté opposé (30) est un extrados d'un profil aérodynamique (22, 46).
